Europäisches Patentamt

European Patent Office

Office européen des brevets

(19)

(11) Veröffentlichungsnummer : **0 120 278**
**B1**

(12) **EUROPÄISCHE PATENTSCHRIFT**

(45) Veröffentlichungstag der Patentschrift :
27.05.87

(21) Anmeldenummer : 84101718.9

(22) Anmeldetag : 20.02.84

(51) Int. Cl.⁴ : **H 05 B 7/144**

(54) **Anordnung zum Umrüsten eines Drehstromlichtbogenofens auf Gleichstrom.**

(30) Priorität : 08.03.83 CH 1239/83

(43) Veröffentlichungstag der Anmeldung :
03.10.84 Patentblatt 84/40

(45) Bekanntmachung des Hinweises auf die Patenterteilung : 27.05.87 Patentblatt 87/22

(84) Benannte Vertragsstaaten :
AT CH DE FR GB IT LI SE

(56) Entgegenhaltungen :
EP-A- 0 023 058
FR-A- 958 788
FR-A- 1 540 339
FR-A- 1 569 102
FR-A- 2 168 430
US-A- 3 292 038

(73) Patentinhaber : BBC Aktiengesellschaft Brown, Boveri & Cie.
Haselstrasse
CH-5401 Baden (CH)

(72) Erfinder : Bühler, Karl
Oberdorfstrasse 28
CH-5415 Nussbaumen (CH)

## Beschreibung

Die vorliegende Erfindung betrifft eine Anordnung zum Umrüsten einer Lichtbogenofenanlage gemäss dem Oberbegriff des Anspruchs 1.

Die Firmenschrift « Arc Furnace Installations Brown Boveri Arcmelt Type AM » der Firma Aktiengesellschaft Brown, Boveri & Cie., Baden/Schweiz, Publikation No. CH-IH-5 124 34E (undatiert), insbesondere Abb. 7 und 8 auf den Seiten 12 und 13, zeigt die herkömmliche elektrische Versorgungseinrichtung eines Drehstromlichtbogenofens.

Während mehr als einem halben Jahrhundert werden Drehstromlichtbogenöfen für die Erzeugung von Elektrostahl verwendet. In diesem Zeitraum wurde dieser Ofentyp technisch immer weiter entwickelt und er gilt heute neben dem Induktionsofen als das wichtigste elektrische Schmelzaggregat in der Eisen- und Stahlindustrie.

Drehstromlichtbogenöfen verursachen besonders in der Einschmelzphase, wenn die Elektroden noch nicht geschmolzenes Einsatzmaterial berühren, häufig Kurzschlüsse, welche trotz sehr rasch reagierender Elektrodenverstellsysteme auf das Versorgungsnetz rückwirkend übertragen werden. Diese Netzrückwirkungen — die sogenannten Flicker — können in leistungsschwachen Versorgungsnetzen zu Spannungseinbrüchen mit nachteiligen Folgeerscheinungen für die an das gleiche Netz angeschlossenen Verbraucher führen.

Drehstromlichtbogenöfen neigen weiterhin zu fluktuierenden Lichtbogenlängen. Diese Erscheinung beeinflusst einerseits den Elektrodenverbrauch in ungünstiger Weise, beansprucht die feuerfeste Auskleidung thermisch stark und führt andererseits zu Lärmbelästigung für die Ofenbedienungsmannschaft.

Die Fortschritte in der Entwicklung von Halbleiterbauelementen in den vergangenen Jahren gaben den Ausschlag dafür, Gleichstromlichtbogenöfen für den industriellen Einsatz zum Verschmelzen von Elektrostahl zu konzipieren.

Mit der Einführung des Gleichstromlichtbogenofens als Substitutionsschmelzaggregat zum Drehstromlichtbogenofen in die Eisen- und Stahlindustrie, wurde vor allem das Ziel verfolgt, die bewährten Eigenschaften des Lichtbogenofens — Wirtschaftlichkeit, Zuverlässigkeit und Robustheit — beizubehalten, jedoch die obengenannten ungünstigen Merkmale des Drehstromlichtbogenofens zu eliminieren.

Bei allfälligen Investitionsentscheidungen von Lichtbogenofenanlagen sieht sich die Eisen- und Stahlindustrie zwei Alternativen gegenübergestellt :

Entweder

eine Neuinvestition einer Gleichstromlichtbogenofenanlage oder

eine Umrüstung einer bereits bestehenden Drehstromlichtbogenanlage auf Gleichstrombetrieb unter Beibehaltung verwendbarer, bereits vorhandener Anlagenteile und lediglich Neuanschaffung zusätzlich erforderlicher Baukomponenten.

Da sich heute fast ausschliesslich Drehstromlichtbogenöfen im Betrieb befinden, wird nicht zuletzt aus wirtschaftlichen Erwägungen heraus der zweiten Alternative ein bedeutendes Gewicht zugemessen werden müssen.

Die Ausgangslage bei einer Umrüstung einer bestehenden Drehstromlichtbogenofenanlage auf Gleichstrombetrieb stellt sich im wesentlichen wie folgt dar :

Beibehaltung des bereits vorhandenen regelbaren Drehstrom-Ofentransformators.

Beibehaltung der zum Ofentransformator gehörigen Hochspannungsanlage.

Neuanschaffung einer Gleichrichteranordnung.

Neuanschaffung der hochstromseitigen Lichtbogenofenausrüstung.

Neuanschaffung oder Aenderung des Lichtbogenofens selbst, im wesentlichen bestehend aus Ofengefäss und Ofendeckel, Elektrodenregeleinrichtung etc.

Bei einer Umrüstung einer bestehenden Drehstromlichtbogenofenanlage auf Gleichstrombetrieb wäre es an sich naheliegend, zwischen dem Drehstromofentransformator und dem Lichtbogenofen einer Gleichrichteranordnung, beispielsweise eine Diodenbrückenschaltung, einzufügen, mit der der Drehstrombetrieb in einen Gleichstrombetrieb umgewandelt werden könnte. Diese Massnahme würde jedoch zu keinem funktionsfähigen Gleichstromlichtbogenofen führen, und zwar aus folgenden Gründen :

Der induktive Blindwiderstand der Hochstromleitungen des Lichtbogenofens, der beim Drehstrombetrieb einen nennenswerten Anteil an dem gesamten induktiven Blindwiderstand darstellt und einen wesentlichen Beitrag zur Begrenzung des Ofenkurzschlussstromes leistete, entfällt nunmehr bei Gleichstrombetrieb, und das Verhältnis von Kurzschlussstrom zu Betriebsstrom des Ofens wird in unzulässiger Weise vergrössert.

Die Wicklungen der Drehstromofentransformatoren sind hochstromseitig als offene Dreiecksschaltung ausgeführt, die ausserhalb des Transformators geschlossen werden. Dabei ergibt sich zwischen der Ofenelektrode und der Schmelze bzw. den festen Materialbestandteilen des Einsatzgutes im Ofengefäss eine Spannung, die das $1/\sqrt{3}$ -fache der Sekundärspannung des Ofentransformators beträgt.

Die Lichtbogenspannung beträgt wiederum bei grösster Ofenleistung das $1/\sqrt{2}$ -fache. Das bedeutet zusammenfassend, dass bei Drehstrombetrieb die Lichtbogenspannung bei grösster Ofenleistung um das $1/\sqrt{3} \cdot \sqrt{2}$ -fache kleiner ist als die Sekundärspannung des Ofentransformators.

Es ist nun von ausschlaggebender Bedeutung, dass die Lichtbogenspannung für einen auf Gleichstrombetrieb umgerüsteten Drehstromofen, unter der Voraussetzung gleicher Ofengrösse und -leistung wie beim vorherigen Drehstrombetrieb, annähernd gleich gross sein soll wie beim vorherigen Drehstrombetrieb.

Durch das blosse Einfügen lediglich einer Gleichrichteranordnung zwischen dem Drehstromtransformator und dem Lichtbogenofen würde nun die Lichtbogenspannung in unzulässiger Weise erhöht werden. Es würde sich ein langer Lichtbogen mit hoher Strahlungsintensität ausbilden, der, wie bereits oben geschildert, schädliche Auswirkungen auf die feuerfeste Auskleidung im Ofengefäss haben würde.

Der vorliegenden Erfindung liegt daher die Aufgabe zugrunde, eine Drehstromlichtbogenofenanlage auf Gleichstrom umzurüsten, wobei die bereits vorhandenen Anlagenkomponenten, nämlich der regelbare Drehstromofentransformator und die Hochspannungsanlage, beibehalten werden können und mit diesen, ursprünglich für einen Drehstrombetrieb konzipierten Anlagenteilen, ein optimaler Gleichstrombetrieb ermöglicht werden kann.

Die Lösung dieser Aufgabe erfolgt durch die im Patentanspruch 1 gekennzeichnete Erfindung. Wesentliches Kennzeichen der Erfindung ist die Beibehaltung des bestehenden regelbaren Ofentransformators und die Einschaltung eines induktiven Adaptionsgliedes und einer Gleichrichteranordnung. Auf diese Weise kann bei einer Umrüstung auf Gleichstrombetrombetrieb der gesamte induktive Blindwiderstand wieder hergestellt werden, um den Kurzschlussstrom zu begrenzen, und das Verhältnis von Kurzschlussstrom zu Betriebsstrom des Ofens zu vergrössern.

Gemäss einer Weiterbildung des Erfindungsgegenstandes ist das induktive Adaptionsglied ein Autotransformator, wobei zwischen dem Autotransformator und der Gleichrichteranordnung eine Drosselspulenanordnung in Serie geschaltet. Somit lassen sich in einfacher Weise der entfallende induktive Blindstromwiderstand in der Hochstromleitung des vormaligen Drehstrombetriebes kompensieren und das optimale Verhältnis von Kurzschlussstrom zu Betriebsstrom einstellen, das vorteilhaft im Bereich zwischen 1,2 und 3,5 liegt.

Die Erfindung wird nachstehend anhand zweier in der Zeichnung dargestellter Ausführungsbeispiele näher erläutert.

In der Zeichnung zeigt :

Figur 1 ein Schaltschema einer ersten erfindungsgemässen Ausführungsanordnung ;

Figur 2 ein Schaltschema einer zweiten erfindungsgemässen Ausführungsform.

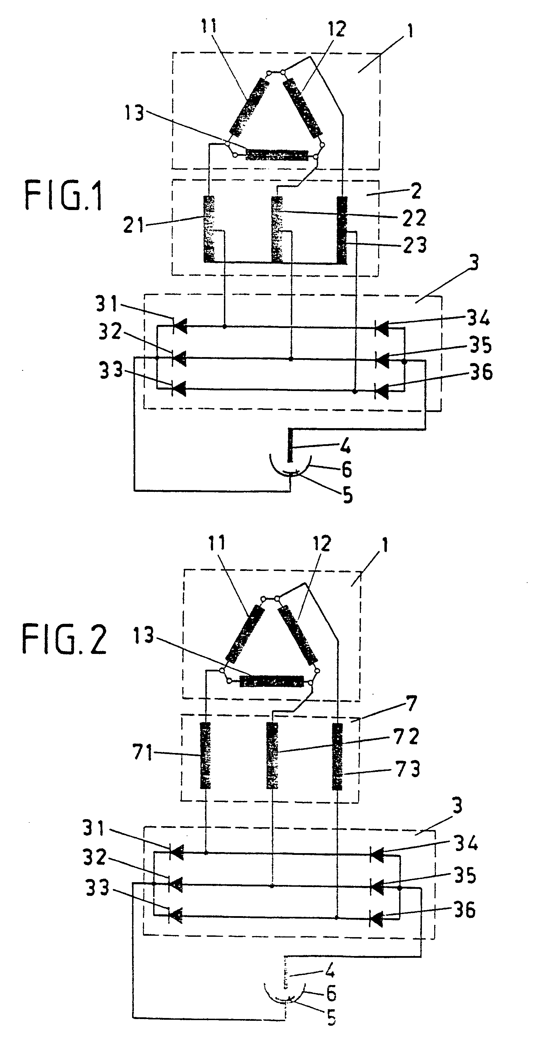

In Fig. 1 sind drei Wicklungen 11, 12, 13 der Sekundärseite eines regelbaren Drehstromofentransformators 1 an drei Wicklungen 21, 22, 23 eines Autotransformators 2 angeschlossen. Die Wicklungen 11, 12, 13 des Ofentransformators 1 sind sekundärseitig als offene Dreiecksschaltung ausgeführt, die dann ausserhalb des Transformators 1 geschlossen werden.

Die Wicklungen 21, 22, 23 des Autotransformators 2 sind dabei jeweils als gemeinsame Primär- und Sekundärwicklungen ausgebildet. Eine Gleichrichteranordnung 3, welche mit paarweise angeordneten Diodengruppen 31, 32, 33 ; 34, 35, 36 bestückt ist, wird als dreiphasige Brückenschaltung von dem Autotransformator 2 gespeist.

Die Gleichstromseite des Gleichrichters 3 ist einerseits mit der Elektrode 4 und andererseits mit der Bodenelektrode 5 im Ofengefäss 6 verbunden.

Der Autotransformator 2 und vor allem dessen sekundärseitiger Spannungsabriff für die Speisung des Gleichrichters 3 ist dabei in der Weise konzipiert, dass bei maximaler Spannung des bestehenden Drehstromtransformators 1 unter Berücksichtigung des induktiven Spannungsabfalls sich gleichstromseitig an den Elektroden 4, 5 im Ofengefäss 6 eine Lichtbogenspannung ergibt, die analog zu derjenigen wie beim vorherigen Drehstrombetrieb ist. Durch diese Anordnung kann der umgerüstete Lichtbogenofen bei Gleichstrom mit annähernd der gleichen Lichtbogenlänge betrieben werden, wie bis anhin mit Drehstrom.

Diese Tatsache ist von grosser Bedeutung für einen wirtschaftlichen Ofenbetrieb für einen von Drehstrom auf Gleichstrom umgerüsteten Lichtbogenofen und schafft die Voraussetzungen dafür, dass ein ehemals für Drehstrom konzipierter Lichtbogenofen mit Gleichstrom unter genau den gleichen optimalen Betriebsbedingungen gefahren werden kann, wie ehemals mit Drehstrom.

Bei zu tiefen Werten für den induktiven Blindwiderstand bzw. bei einem Spannungsabgriff am Autotransformator 2, der eine zu hohe Spannung am Eingang des Gleichrichters 3 ergibt oder aber auch aus Gründen, die Ofenleistung über bestimmte Bereiche variieren zu können, wird vorzugsweise ein steuerbarer, mit Thyristoren bestückter Gleichrichter verwendet.

Fig. 2 zeigt prinzipiell die gleiche Schaltungsanordnung wie in Fig. 1, nur mit einer Drosselspulenanordnung 7 mit den Wicklungen 71, 72, 73, anstatt des Autotransformators 2. Der Unterschied zu Fig. 1 besteht darin, dass auch bei Leerlauf des Lichtbogenofens, d. h., wenn der Strom Null ist, die volle Sekundärspannung des Drehstromofentransformators 1 am Eingang des Gleichrichters 3 anliegt.

Die Drosselspulenanordnung 7 erbringt den erforderlichen induktiven Blindwiderstand, der durch die Umrüstung von Drehstrom auf Gleichstrom im Hochstromteil des Lichtbogenofens verloren ging.

Mit Hilfe dieser Drosselspulenanordnung 7 wird bei Gleichstrombetrieb das Verhältnis von Kurzschlusstrom zu Betriebsstrom, wie es ehemals bei dem Drehstrombetrieb bestand, wieder hergestellt.

Es versteht sich von selbst, dass die elektrischen Kenndaten des Autotransformators 2 gemäss Fig. 1, besonders was den Abgriff der Sekundärspannung am Autotransformator anbelangt, sowie die Auslegung Drosselspule 7 nach Fig. 2 denjenigen Kenngrössen des nunmehr auf Gleichstrom umgerüsteten Lichtbogenofens 4, 5, 6 anzupassen sind.

Es hat sich als vorteilhaft erwiesen, ein Umspannverhältnis von Primärspannung zu Sekundärspannung des Autotransformators 2 zu wählen, welches vorzugsweise im Bereich zwischen 1, 2 und 2,5 liegt. Damit wird eine optimale Lichtbogenspannung des vormaligen Drehstrombetriebes für den nunmehr gültigen Gleichstrombetrieb erzielt.

Dieses Umspannverhältnis kann aber auch ausserhalb dieses genannten Bereiches des Umspannverhältnisses liegen, insbesondere dann, wenn die vormalige Drehstromlichtbogenofenanlage bezüglich ihrer Lichtbogenspannung nicht optimal ausgelegt war.

War beispielsweise im vormaligen Drehstrombetrieb die Lichtbogenspannung von vornherein zu gering ausgelegt, oder wurden am Lichtbogenofengefäss im nachhinein wassergekühlte Gefässwände eingebaut, so kann auf ein Heruntertransformieren mittels eines Autotransformators 2 gänzlich verzichtet werden, und es genügt in diesem Fall, eine Erhöhung des induktiven Blindwiderstandes durch Einschaltung einer Drosselspulenanordnung 7 zwischen den Drehstromtransformator 1 und der Gleichrichteranordnung 3 gemäss Fig. 2.

Es ist bei einem von Drehstrom auf Gleichstrom umzurüstenden Lichtbogenofen unter bestimmten Umständen sogar vorteilhaft, dem Autotransformator 2 eine Drosselspulenanordnung 7 drehstromseitig in Serie nachzuschalten, um damit bei gleichzeitiger Verringerung der Sekundärspannung des Ofentransformators 1 eine Erhöhung des induktiven Blindwiderstandes zu erzielen.

## Patentansprüche

1. Anordnung zum Umrüsten einer Lichtbogenofenanlage von Drehstrom- · auf Gleichstrombetrieb, wobei die Lichtbogenofenanlage im wesentlichen aus einem Hochspannungstransformator, einem regelbaren Drehstromofentransformator (1), einem Ofengefäss (6) und mindestens zwei Elektroden (4, 5) besteht, dadurch gekennzeichnet, dass unter Beibehaltung des bestehenden regelbaren Drehstromofentransformators (1) zwischen dessen Sekundärseite (11, 12, 13) und den Elektroden (4, 5) ein induktives Adaptionsglied in Form eines Transformators mit einem Umspannverhältnis im Bereich von 1,2 bis 2,5 zur Reduktion der Lichtbogenspannung sowie eine Gleichrichteranordnung (3) eingeschaltet ist.

2. Anordnung nach Anspruch 1, dadurch gekennzeichnet, dass der Transformator ein Autotransformator (2) ist, und dass zwischen dem Autotransformator (2) und der Gleichrichteranordnung (3) eine Drosselspulenanordnung (7) in Serie geschaltet ist.

3. Anordnung nach einem der Ansprüche 1 oder 2, dadurch gekennzeichnet, dass das Verhältnis von Kurzschlussstrom zu Betriebsstrom im Bereich 1,2 bis 3,5 liegt.

4. Anordnung nach einem der Ansprüche 1 bis 3, dadurch gekennzeichnet, dass die Gleichrichteranordnung (3) als steuerbarer Gleichrichter ausgebildet ist.

## Claims

1. Arrangement for converting an arc furnace plant from three-phase current to direct current operation, the arc furnace plant essentially consisting of a high-voltage transformer, a variable three-phase furnace transformer (1), a furnace vessel (6) and at least two electrodes (4, 5), characterized in that, whilst retaining the existing variable three-phase furnace transformer (1), an inductive adaption section in the form of a transformer having a transformation ratio within a range from 1.2 to 2.5 for reducing the arc voltage, and a rectifier arrangement (3), is connected between its secondary side (11, 12, 13) and the electrodes (4, 5).

2. Arrangement according to Claim 1, characterized in that the transformer is an autotransformer (2) and that a reactor coil arrangement (7) is connected in series between the autotransformer (2) and the rectifier arrangement (3).

3. Arrangement according to one of Claims 1 or 2, characterized in that the ratio between short-circuit current and operating current lies within a range from 1.2 to 3.5.

4. Arrangement according to one of Claims 1 to 3, characterized in that the rectifier arrangement (3) is constructed as controllable rectifier.

## Revendications

1. Système pour adapter une installation de four à arc d'un fonctionnement en courant triphasé à un fonctionnement en courant continu, étant entendu que l'installation de four à arc est constituée essentiellement d'un transformateur à haute tension, d'un transformateur de four à courant triphasé réglable (1), d'une cuve de four (6) et d'au moins deux électrodes (4, 5), caractérisé en ce que, tout en conservant le transformateur de four à courant triphasé réglable existant (1), on intercale, entre son côté secondaire (11, 12, 13) et les électrodes (4, 5), un élément d'adaptation inductif ayant la forme d'un transformateur à rapport de transformation compris entre 1,2 et 2,5, pour réduire la tension d'arc et un dispositif redresseur (3).

2. Système suivant la revendication 1, caractérisé en ce que le transformateur est un autotransformateur (2) et un montage de bobines d'arrêt (7) est connecté en série entre l'autotransformateur (2) et le dispositif redresseur (3).

3. Système suivant la revendication 1 ou 2, caractérisé en ce que le rapport du courant de court-circuit au courant de fonctionnement est compris entre 1,2 et 3,5.

4. Système suivant l'une quelconque des revendications 1 à 3, caractérisé en ce que le dispositif redresseur (3) a la forme d'un redresseur pilotable.

FIG.1

FIG.2